# EUROPÄISCHE PATENTSCHRIFT

(11) **EP 1 676 735 B1**
(45) Veröffentlichungstag und Bekanntmachung des Hinweises auf die Patenterteilung: **16.12.2009**
(21) Anmeldenummer: 05027915.7
(22) Anmeldetag: 20.12.2005
(51) Int. Cl.: B60J 1/20

(54) **Seitenfensterrollosystem für ein Dreiecksfenster eines Kraftfahrzeugs**
Roller blind system for triangular vehicle side window
Système store à enrouleur pour une vitre latérale triangulaire de véhicule

(30) Priorität: 30.12.2004 DE 202004020177 U
(43) Veröffentlichungstag der Anmeldung: 05.07.2006
(73) Patentinhaber: HS Products Engineering GmbH, 82239 Alling (DE)
(72) Erfinder: Ziegenbein, Werner, 81929 München (DE)
(74) Vertreter: Eisenführ, Speiser & Partner

(56) Entgegenhaltungen:
- EP-A- 1 129 871
- DE-A1- 19 826 537
- DE-U1- 29 921 860
- JP-A- 10 043 041

## Beschreibung

Die vorliegende Erfindung betrifft ein Seitenfensterrollo system für ein Seitenfenster, insbesondere ein Dreiecksfenster, eines Kraftfahrzeugs mit den Merkmalen gemäß dem Oberbegriff des Anspruchs 1.

Als Dreiecksfenster sind insbesondere all jene Seitenfenster eines Kraftfahrzeugs gemeint, die keine im Wesentlichen rechtwinklige oder parallelogrammartige Kontur aufweisen, sondern in der Regel im vorderen Bereich des vorderen Seitenfensters oder im hinterem Bereich des hinteren Seitenfensters, jeweils bezogen auf die Fahrtrichtung des Kraftfahrzeugs, stumpfwinklig und/oder mit Radien versehen auslaufen.

In der Praxis sind Fensterrollos für Heckscheiben von Kraftfahrzeugen seit längerem bekannt. Da Heckscheiben in der Regel zumindest annähernd die Form eines Rechtecks aufweisen, kann das für ein Fensterrollo wichtige Kriterium des faltenfreien Ein- und Ausziehens der Rollobahn mit einer verhältnismäßig einfach aufgebauten Mechanik erreicht werden. Hierbei greift die Kraft zum Ausziehen der ebenfalls in Form eines Rechtecks ausgebildeten Rollobahn in einem Winkel von 90° an einem Zugstab an der vorderen Kante des freien Endes der Rollobahn an, so dass ein, bezogen auf die Breite der Rollobahn, gleichmäßiger Zug entlang einer Geraden während des Ausziehens auf diese ausgeübt werden kann, wodurch die Faltenfreiheit sichergestellt ist.

Dies ist im Gegensatz hierzu bei Seitenfenstern, die eine von der Rechteck- oder Parallelogrammkontur abweichende Form aufweisen, auf Grund der Asymmetrie derartiger Fenster und damit der notwendigen Asymmetrie der Rollobahn auf diese einfache Weise nicht möglich.

Aus der DE 299 21 860 U ist ein Fensterrollo für ein asymmetrisches Seitenfenster bekannt, das einen Auszugsarm aufweist, der mit seinem zweiten Ende an dem freien Ende der Rollobahn angreift und der als Kipphebel ausgestaltet ist. Der Kipphebel wird an seinem ersten Ende entlang einer Führungsbahn geführt und ist um eine zwischen dem ersten und dem zweiten Ende liegende Schwenkachse schwenkbar gelagert. Dieser Kipphebel wird von einem Linearantrieb, typischerweise einer Spindel mit einem darauf verfahrbaren Schlitten, an dem der Kipphebel angelenkt ist, bewegt. Dabei sind die lineare Führungsbahn und die Richtung des Linearantriebs unter einem spitzen Winkel zueinander angeordnet. Hierdurch führt der Kipphebel während der Linearbewegung des Schlittens und somit seiner Schwenkachse eine überlagerte Schwenkbewegung aus, so dass einerseits die Ausziehkraft auch in einem von 90° abweichenden Winkel an der Vorderkante der Rollobahn angreifen kann und andererseits eine Übersetzung der Antriebsbewegung in eine Ausziehbewegung erzielt wird, die eine verkürzte Ausgestaltung des Antriebswegs ermöglicht.

Die Offenlegungsschrift DE 198 26 537 A1 offenbart ein durch einen mechanischen Antrieb verlagerbares Rollo, das auf einer Rollowalze aufgerollt ist und durch einen Betätigungsarm verlagert werden kann. Der Betätigungsarm wird in zwei geradlinigen Führungsbahnen geführt, wobei Rollowalze und Führungsbahnen etwa rechtwinklig zueinander verlaufen. Der Betätigungsarm kann eine Kippbewegung ausführen, wodurch die Antriebsbewegung in eine Ausziehbewegung übersetzt werden kann.

Der hohe mechanische Aufwand, d. h. die Vielzahl beweglicher Teile des Antriebs, der Führung und des Auszugsarms, ziehen letztlich hohe Produktionskosten nach sich. Aufgabe der vorliegenden Erfindung ist es demgemäß, ein Seitenfensterrollosystem mit einem kostengünstigeren Aufbau zu schaffen.

Die Aufgabe wird durch ein Seitenfensterrollosystem der eingangs genannten Art mit den Merkmalen des kennzeichnenden Teils des Anspruchs 1 gelöst. In den sich daran anschließenden Ansprüchen 2 bis 13 finden sich vorteilhafte Weiterbildungen des erfindungsgemäßen Seitenfensterrollosystems.

Durch die gekrümmte Führungsbahn kann auf einen großen Teil der beweglichen, insbesondere die mit dem Hebelmechanismus zur Erzeugung der überlagerten Schwenkbewegung des Auszugsarms verbundenen, Elemente des Seitenfensterrollos verzichtet werden, da die Schwenkbewegung und die lineare Bewegung aufgrund der Bahnkrümmung integriert sind. Die Krümmung der Führungsbahn kann auf einfache Weise an die jeweilige Form des Seitenfensters angepasst werden, ohne dabei den mechanischen Aufwand zu erhöhen. Hierdurch ist bei vergleichsweise geringen Kosten ein sehr viel höherer Grad an Flexibilität möglich, da das erfindungsgemäße Seitenfensterrollo unter Verwendung einheitlicher Bauteile - bis auf die jeweils angepasste Führungsbahn - auf unterschiedliche, auch komplexe Fensterformen angepasst werden kann.

In einer bevorzugten Ausführungsform beschreibt die Führungsbahn einen Kreisabschnitt. Bei einer vorteilhaft weitergebildeten Kombination einer konischen, von oben nach unten verjüngten Wickelwelle und einer nach unten gerichteten Krümmung der kreisabschnittförmigen Führungsbahn wird eine besonders günstige Abwickelbewegung ermöglicht. Dies trifft insbesondere dann zu, wenn der Mittelpunkt des Kreisabschnitts der Führungsbahn mit dem Zentrum der Konizität der Wickelwelle zusammenfällt. Die Abwicklung der Wickelwelle bildet dann nämlich ein Kreissegment, welches konzentrisch zu dem Kreisabschnitt der Führungsbahn ausgerichtet ist. Die Kraft zum Ausziehen der Rollobahn greift bei dieser Ausführungsform immer Winkel von 90° an der vorderen Kante des freien Endes der Rollobahn an, so dass trotz der Kurve, die die Auszugsbewegung beschreibt, ein gleichmäßiger Zug auf die Rollobahn ausgeübt wird, wodurch auch bei asymmetrischer Geometrie des Seitenfensters bzw. der Rollobahn Faltenfreiheit beim Ausziehen und Aufrollen sichergestellt ist.

Das Seitenfensterrollosystem ist für den Anbau an der Karosserie des Kraftfahrzeugs bevorzugt dergestalt eingerichtet, dass der Mittelpunkt des Kreisabschnitts der Führungsbahn in etwa mit einem Schnittpunkt von in einem Winkel zueinander angeordneten Seitenkanten des Seitenfensters zusammenfällt. Dies ermöglicht eine optimale Anpassung der Auszugsbewegung der Rollobahn an das Seitenfenster. Ferner ist somit gewährleistet, dass der Auszugsarm sowohl bei ausgezogenem als auch bei eingezogenem Seitenfensterrollo, parallel zu jeweils einer der Seitenkanten des Seitenfensters verläuft und somit beispielsweise in bzw. hinter einem die Seitenkanten des Seitenfensters definierenden Fensterholm oder Fensterteilungssteg verborgen werden kann.

Die Vorschubmittel umfassen vorzugsweise ein biegsames Schubelement. Ein biegsames Schubelement hat den Vorteil, dass es universell, d. h. unabhängig von der Seitenfensterform und somit von der Krümmung der Führungsbahn, einsetzt werden kann. Dies ermöglicht, dass nahezu unabhängig von der Karosserieform dieselben Bauteile für die Antriebseinrichtung eingesetzt werden können. In vorteilhafter Ausgestaltung wird als biegsames Schubelement ein Antriebskabel mit einem schraubenförmig umwickelten Draht verwendet, wobei die Antriebseinrichtung ferner einen Antriebsmotor und ein Getriebeelement, z. B. ein Ritzel, Zahnrad oder dgl., aufweist, welches getriebeartig mit dem schraubenförmig umwickelten Draht des Antriebskabels zusammenwirkt.

Weitere Merkmale und Vorteile der Erfindung werden nun anhand eines Ausführungsbeispiels mit Hilfe der zugehörigen Figur näher erläutert. Darin zeigt:

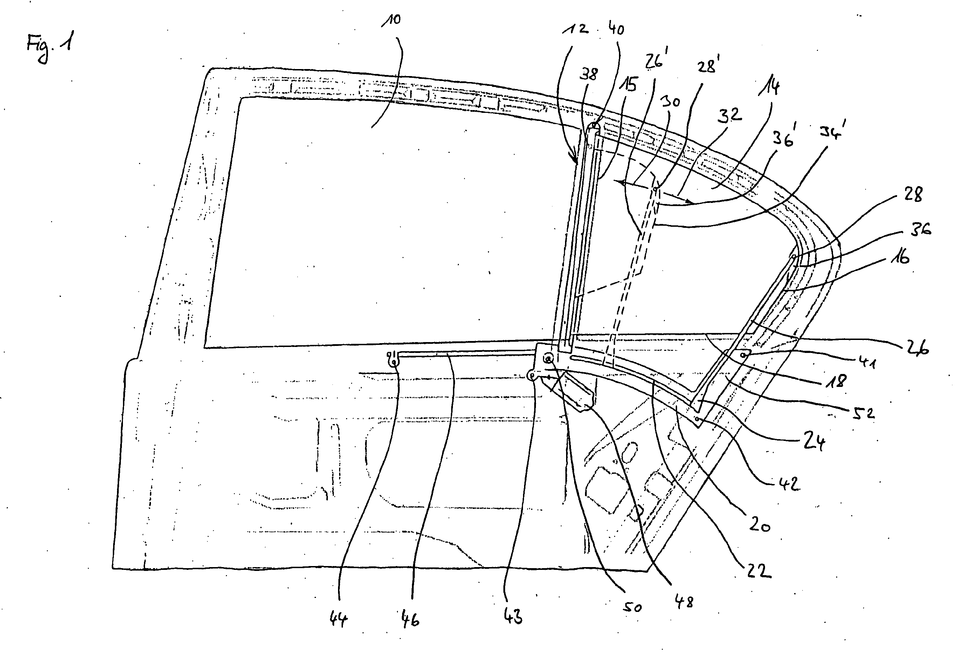

- Fig. 1: einen Ausschnitt einer hinteren Kraftfahrzeugtür mit einem ein Dreiecksfenster abdeckendes, erfindungsgemäßes Seitenfensterrollosystem.

In Fig. 1 ist schematisch eine Fensterbaugruppe für ein Kraftfahrzeug dargestellt, die im Fondbereich, beispielsweise im Bereich der hinteren Tür eines viertürigen Kraftfahrzeugs, unter der Seitenverkleidung an der Karosserie des Kraftfahrzeugs angebaut sein kann. Das Seitenfenster umfasst einen viereckförmigen Teil 10, von welchem mittels eines Fensterteilungsstegs 12 ein sich - in Bezug auf die Fahrzeugorientierung - hinten anschließendes Dreiecksfenster 14 abgetrennt ist. Der Fensterteilungssteg definiert zugleich eine erste, näherungsweise vertikale Seitenkante 15 des Dreiecksfensters. Das Dreiecksfenster 14 besitzt - jedenfalls in grober Näherung - die Form eines sich nach hinten (in Fig. 1 nach rechts) verjüngenden Dreiecks, dessen obere Dreiecksseite leicht konvex gekrümmt und dessen rechte Ecke von einer zweiten Seitenkante 16 teilweise gekappt und teilweise abgerundet ist. Das Dreiecksfenster 14 ist auf seiner Unterseite von einer im Wesentlichen horizontal angeordneten Unterkante 18 begrenzt.

Die erste und zweite Seitenkante 15, 16 des Dreiecksfensters 14 schließen in ihrer gedachten Verlängerung einen spitzen Winkel ein. Der Schnittpunkt dieser gedachten Verlängerung nach unten ist zugleich der Mittelpunkt der an einem Rahmenelement 20 des Seitenfensterrollos ausgebildeten Führungsbahn 22. In der Führungsbahn 22 wird ein Führungsschlitten 24 geführt, an dem der Auszugsarm 26 befestigt ist. Der Führungsschlitten und der Auszugsarm können auch einstückig zusammenhängen. Der Auszugsarm ist zum Einen in der geschlossenen Position des Seitenfensterrollos dargestellt, durchgezogene Linie 26 am rechten Fensterrand, und zum Anderen in teilweise geöffneter Position, gestrichelte Linie 26'.

Auf Grund der kreissegmentförmigen Führungsbahn 22 bewegt sich der Auszugsarm 26 sowie der an dessen oberen Ende befindliche Anlenkpunkt 28 auf einem Abschnitt einer durch die Pfeile 30 und 32 angedeuteten Kreisbahn um den Mittelpunkt der gedachten Verlängerung der beiden Seitenkanten 15 und 16. Da der Mittelpunkt des Kreisabschnitts der Führungsbahn 22 - zumindest näherungsweise - mit dem Schnittpunkt der Seitenkanten 15, 16 des Seitenfensters 14 zusammenfällt, ist der Auszugsarm zugleich in der geöffneten wie der zugezogenen Stellung des Seitenfensterrollos parallel zu den Seitenkanten 15, 16 ausgerichtet und behindert in diesen Stellungen somit nicht die Sicht. Er kann in diesen Stellungen beispielsweise hinter den Fensterholmen bzw. dem Fensterteilungssteg 12 verdeckt angeordnet werden.

Die Rollobahn weist eine dem Dreiecksfenster 14 im Wesentlichen folgende Kontur auf. Ihr freies Ende 34 ist in der teilweise ausgezogenen Darstellung als gestrichelte Linie 34' besser erkennbar. Im Bereich des Anienkpunkts 28 des Auszugsarms 26 ist an dem freien Ende der Rollobahn 34 ein Zugstab befestigt. Dieser ist gelenkig oder zumindest flexibel mit dem Auszugsarm verbunden und sorgt für eine gleichmäßige Einleitung der Zugkraft in die Rollobahn und somit für ein faltenfreies Ab- und Aufrollen derselben.

Die Rollobahn ist auf einer in einem nicht dargestellten Gehäuse untergebrachten Wickelwelle 38 aufgerollt. Die Wickelwelle 38 ist von oben nach unten konisch verjüngt und dergestalt auf das Seitenfenster ausgerichtet, dass das Zentrum ihrer Konizität mit dem Mittelpunkt des von der Führungsbahn 22 gebildeten Kreisabschnitts und somit mit dem Schnittpunkt der gedachten Verlängerung der Seitenkanten 12, 16 des Seitenfensters 14 zusammenfällt. Somit bildet die gedachte Abwicklung der Wickelwelle ein zur Führungsbahn konzentrisch ausgerichtetes Kreisscheibensegment. Auch dieser Umstand sorgt für ein faltenfreies Ab- und Aufrollen der Rollobahn.

Das Gehäuse der Wickelwelle 38 verbirgt sich quasi unsichtbar hinter dem Fensterteilungssteg 12. Es ist an seinem unteren Ende mit dem Rahmenelement 20 verbunden. Beide zusammen sind so eingerichtet, dass sie an mehreren Befestigungspunkten 40, 41, 42, 43 an der Seitentür bzw. der Karosserie angebracht werden können.

Ein weiterer Befestigungspunkt 44 befindet sich an einem von dem Seitenfensterrollo abgewandten Ende einer Kabelführung 46 für ein nicht näher dargestelltes Antriebskabel als flexibles Schubelement. Das in der Kabelführung 46 hin und her bewegliche Antriebskabel wird von einem Motor 48 über ein als Ritzel, Zahnrad oder dgl. ausgebildetes Getriebeelement 50 angetrieben, welches mit seinen Zähnen in die Gänge des schraubenförmig umwickelten Drahts des Antriebskabels getriebeartig eingreift. Das Antriebskabel ist an seinem in Fahrzeugrichtung hinteren Ende mit dem Auszugsarm 36 bzw. dem Führungsschlitten 24 verbunden, so dass dieser durch das Antriebskabel betätigt entlang der kreissegmentförmigen Führungsbahn 22 hin- und hergeschwenkt werden kann.

Das Rahmenelement 20 weist an seinem der Wickelwelle 38 gegenüberliegenden Ende einen L-förmigen Abschnitt 52 auf. Der von dem Gehäuse der Wickelwelle 38, dem Rahmenelement 20 und dem L-förmigen Abschnitt 52 gebildete Grundkörper des Seitenfensterrollos lässt sich auf sehr stabile Weise an der Karosserie des Kraftfahrzeugs befestigen, was schließlich zu einer sehr exakten Führung des Seitenfensterrollos beiträgt.

## Patentansprüche

1. Seitenfensterrollosystem für ein Seitenfenster (14), insbesondere ein Dreiecksfenster eines Kraftfahrzeugs, mit einer Rollobahn zum Abdecken des Seitenfensters (14), einer im Bereich einer Seitenkante (15) des Seitenfensters (14) anzuordnenden Wickelwelle (38) für die Rollobahn, einer im Wesentlichen unterhalb einer Unterkante (18) des Seitenfensters (14) anzuordnenden Führungsbahn (22) und einer Antriebseinrichtung (48, 50), welche Vorschubmittel und einen Auszugsarm (26) aufweist, wobei der Auszugsarm (26) im Bereich seines ersten Endes entlang der Führungsbahn (22) geführt und mit den Vorschubmitteln verbunden ist und im Bereich seines zweiten Endes mit einem freien Ende (34) der Rollobahn verbunden ist, **dadurch gekennzeichnet, dass** die Führungsbahn (22) gekrümmt ist.

2. Seitenfensterrollosystem nach Anspruch 1,
**dadurch gekennzeichnet, dass** die Führungsbahn (22) einen Kreisabschnitt beschreibt.

3. Seitenfensterrollosystem nach Anspruch 2,
**dadurch gekennzeichnet, dass** die Wickelwelle (38) konisch ist.

4. Seitenfensterrollosystem nach Anspruch 3,
**dadurch gekennzeichnet, dass** die Wickelwelle (38) sich konisch von oben nach unten verjüngt und die Führungsbahn (22) nach unten gekrümmt ist.

5. Seitenfensterrollosystem nach Anspruch 4,
**dadurch gekennzeichnet, dass** der Mittelpunkt des Kreisabschnitts der Führungsbahn (22) mit dem Zentrum der Konizität der Wickelwelle (38) zusammenfällt.

6. Seitenfensterrollosystem nach einem der Ansprüche 2 bis 5,
**dadurch gekennzeichnet, dass** der Mittelpunkt des Kreisabschnitts der Führungsbahn (22) in etwa mit einem Schnittpunkt von in einem Winkel zueinander angeordneten Seitenkanten (15, 16) des Seitenfensters (14) zusammenfällt.

7. Seitenfensterrollosystem nach einem der vorstehenden Ansprüche,
**dadurch gekennzeichnet, dass** die Vorschubmittel ein biegsames Schubelement umfassen.

8. Seitenfensterrollosystem nach Anspruch 7,
**dadurch gekennzeichnet, dass** das biegsame Schubelement als Antriebskabel mit einem schraubenförmig umwickelten Draht ausgebildet ist.

9. Seitenfensterrollosystem nach Anspruch 8,
**dadurch gekennzeichnet, dass** die Antriebseinrichtung einen Antriebsmotor (48) und ein Getriebeelement (50) aufweist, welches getriebeartig mit dem schraubenförmig umwickelten Draht des Antriebskabels zusammenwirkt.

10. Seitenfensterrollosystem nach einem der vorstehenden Ansprüche,
**dadurch gekennzeichnet, dass** der Auszugsarm (26) an einem an dem freien Ende (34) der Rollobahn befestigten Zugstab (36) angelenkt ist.

11. Seitenfensterrollosystem nach einem der vorstehenden Ansprüche,
**dadurch gekennzeichnet, dass** die Wickelwelle (38) in einem Gehäuse aufgenommen ist, welches für den Einbau in einem Fensterholm des Seitenfensters (14) vorbereitet ist.

12. Seitenfensterrollosystem nach einem der vorstehenden Ansprüche,
**dadurch gekennzeichnet, dass** die Führungsbahn (22) und die Antriebseinrichtung an einem gemeinsamen Rahmenelement (20) ausgebildet und/oder angebracht sind, welches für den Anbau an der Karosserie des Kraftfahrzeugs unterhalb des Seitenfensters (14) vorbereitet ist.

13. Seitenfensterrollosystem nach den Ansprüchen 11 und 12,
**dadurch gekennzeichnet, dass** das Gehäuse und das Rahmenelement (20) miteinander verbunden sind.

## Claims

1. A roller blind system for a side window (14), in particular a triangle window of a vehicle, comprising a roller blind web for covering the side window (14), a winding shaft (38) for the roller blind web which is to be arranged in the range of a side edge (15) of the side window (14), a guideway (22) which is to be arranged substantially below a lower edge (18) of the side window (14), and a driving means (48, 50) having feed means and an extraction arm (26), wherein the extraction arm (26) is, in the range of its first end, guided along the guideway (22) and connected to the feed means, and is, in the range of its second end, connected to a free end (34) of the roller blind web, **characterized in that** the guideway (22) is curved.

2. The roller blind system for a side window as claimed in claim 1,
**characterized in that** the guideway (22) describes a segment of a circle.

3. The roller blind system for a side window as claimed in claim 2,
**characterized in that** the winding shaft (38) is tapered.

4. The roller blind system for a side window as claimed in claim 3,
**characterized in that** the winding shaft (38) tapers from the top to the bottom, and the guideway (22) is curved downwards.

5. The roller blind system for a side window as claimed in claim 4,
**characterized in that** the center of the circle segment of the guideway (22) coincides with the center of the tapering of the winding shaft (38).

6. The roller blind system for a side window as claimed in any one of the claims 2 to 5,
**characterized in that** the center of the circle segment of the guideway (22) coincides approximately with an intersection point of side edges (15, 16) of the side window (14) arranged with an angle to each other.

7. The roller blind system for a side window as claimed in any one of the preceding claims,
**characterized in that** the feed means comprise a bendable push element.

8. The roller blind system for a side window as claimed in claim 7,
**characterized in that** the bendable push element is formed as a driving cable having a helically wrapped wire.

9. The roller blind system for a side window as claimed in claim 8,
**characterized in that** the driving means comprises a driving motor (48) and a gear device (50) cooperating gear-like with the helically wrapped wire of the driving cable.

10. The roller blind system for a side window as claimed in any one of the preceding claims,
**characterized in that** the extraction arm (26) is pivotably attached to a tension rod (36) fixed to the free end (34) of the roller blind web.

11. The roller blind system for a side window as claimed in any one of the preceding claims,
**characterized in that** the winding shaft (38) is accommodated in a housing prepared to be incorporated into a window pillar of the side window (14).

12. The roller blind system for a side window as claimed in any one of the preceding claims,
**characterized in that** the guideway (22) and the driving means are formed and/or attached to a common frame element (20) prepared to be attached to the body of the vehicle below the side window (14).

13. The roller blind system for a side window as claimed in claim 11 or 12,
**characterized in that** the housing and the frame element (20) are coupled to each other.

## Revendications

1. Système de store pour fenêtre latérale destiné à une fenêtre latérale (14), notamment une fenêtre triangulaire, d'une automobile, comportant un pan de store pour couvrir la fenêtre latérale (14), un arbre d'enroulement (38) pour le pan de store à disposer à une arête latérale de la fenêtre latérale (14), une glissière de guidage (22) à disposer essentiellement au-dessous d'une arête latérale (18) de la fenêtre latérale (14) et un dispositif d'entraînement (48, 50) comprenant des moyens d'avancement et un bras d'extraction (26), le bras d'extraction (26) étant guidé près de sa première extrémité le long de la glissière de guidage (22) et étant relié aux moyens d'avancement et étant relié à une extrémité libre (34) du pan de store, près de sa deuxième extrémité,
**caractérisé en ce que** la glissière de guidage (22) est courbée.

2. Système de store pour fenêtre latérale selon la revendication 1,
**caractérisé en ce que** la glissière de guidage (22) décrit un segment de cercle.

3. Système de store pour fenêtre latérale selon la revendication 2,
**caractérisé en ce que** l'arbre d'enroulement (38) est conique.

4. Système de store pour fenêtre latérale selon la revendication 3,
**caractérisé en ce que** l'arbre d'enroulement (38) se réduit en forme conique du haut vers le bas et **en ce que** la glissière de guidage (22) est courbée vers le bas.

5. Système de store pour fenêtre latérale selon la revendication 4,
**caractérisé en ce que** le centre du segment de cercle de la glissière de guidage (22) coïncide avec le centre de conicité de l'arbre d'enroulement (38).

6. Système de store pour fenêtre latérale selon l'une quelconque des revendications 2 à 5,
**caractérisé en ce que** le centre du segment de cercle de la glissière de guidage (22) coïncide approximativement avec un point d'intersection d'arêtes latérales (15, 16) de la fenêtre latérale (14) qui forment un angle l'une par rapport à l'autre.

7. Système de store pour fenêtre latérale selon l'une quelconque des revendications précédentes,
**caractérisé en ce que** les moyens d'avancement comprennent un élément d'avancement flexible.

8. Système de store pour fenêtre latérale selon la revendication 7,
**caractérisé en ce que** l'élément d'avancement flexible est conçu comme câble de commande comportant un fil enveloppé hélicoïdalement.

9. Système de store selon la revendication 8,
**caractérisé en ce que** le dispositif d'avancement comprend un moteur d'entraînement (48) et un élément de transmission (50) lequel concoure de façon similaire à une transmission avec le fil enveloppé hélicoïdalement du câble de commande.

10. Système de store selon l'une quelconque des revendications précédentes,
**caractérisé en ce que** le bras d'extraction (26) est articulé à un bord rigide (36) qui est fixé à l'extrémité libre (34) du pan de store.

11. Système de store selon l'une quelconque des revendications précédentes,
**caractérisé en ce que** l'arbre d'enroulement (38) est logé dans une cassette préparée à être montée dans un montant de la fenêtre latérale (14).

12. Système de store selon l'une quelconque des revendications précédentes,
**caractérisé en ce que** la glissière de guidage (22) et le dispositif d'entraînement sont formés et/ou montés à un élément de cadre (20) commun qui est préparé à être monté au-dessous de la fenêtre latérale (14) à la carrosserie de l'automobile.

13. Système de store selon les revendications 11 et 12,
**caractérisé en ce que** le boîtier et l'élément de cadre (20) sont reliés entre eux.
